# EUROPÄISCHE PATENTSCHRIFT

(11) **EP 2 920 769 B1**
(45) Veröffentlichungstag und Bekanntmachung des Hinweises auf die Patenterteilung: **19.10.2022**
(21) Anmeldenummer: 13789712.0
(22) Anmeldetag: 13.11.2013
(51) Int. Cl.: G07D 7/06

(54) **VORRICHTUNG UND VERFAHREN ZUR PRÜFUNG VON WERTDOKUMENTEN**
APPARATUS AND METHOD TO EVALUATE VALUABLE DOCUMENTS
L'APPAREIL ET METHODE POUR EVALUER LES DOCUMENTS DE VALEUR

(30) Priorität: 13.11.2012 DE 102012022216
(43) Veröffentlichungstag der Anmeldung: 23.09.2015
(73) Patentinhaber: Giesecke+Devrient Currency Technology GmbH, 81677 München (DE)
(72) Erfinder: SU, Shanchuan, 85579 Neubiberg (DE)
(74) Vertreter: Giesecke + Devrient IP
(86) Internationale Anmeldenummer: PCT/EP2013/003416
(87) Internationale Veröffentlichungsnummer: WO 2014/075796

(56) Entgegenhaltungen:
- DE-A1- 19 921 653
- US-A1- 2007 209 904
- US-A1- 2007 242 857

## Beschreibung

Die Erfindung betrifft eine Vorrichtung und ein Verfahren zur Prüfung von Wertdokumenten, insbesondere Banknoten, sowie eine Wertdokumentbearbeitungsvorrichtung, die die Vorrichtung zur Prüfung von Wertdokumenten aufweist.

In Banknotenbearbeitungssystemen werden Eigenschaften von Banknoten, wie z.B. Druckbild, Stückelung, Echtheit und Verschmutzung, ermittelt, indem physikalische Eigenschaften der Banknoten mittels Sensoren erfasst und die hierbei erzeugten Sensordaten mittels Algorithmen ausgewertet werden.

Die US20007/209904 A1 offenbart einen Magnetsensor zur magnetischen Prüfung der Magnetkodierung eines magnetischen Sicherheitsfadens einer Banknote. Das von dem Magnetsensor detektierte analoge Magnetsignal der Magnetkodierung wird binärisiert und dann mit Referenzsignalen verglichen, um die Denomination der Banknote festzustellen. Die DE1992653 A1 offenbart, mittels einer Infrarot-Transmissionsmessung die Magnetkodierung eines Sicherheitsfadens zu lesen.

Aus US 5,468,971 ist bekannt, ein Transmissionsbild eines auf einer Banknote befindlichen Sicherheitsfadens zu erfassen und zur Ermittlung der in den Sicherheitsfaden eingebrachten Zeichen einer Zeichenerkennung zu unterziehen. Anhand der auf diese Weise ermittelten Beschriftung des Sicherheitsfadens wird die Denomination der jeweiligen Banknote bestimmt.

Das bekannte Verfahren setzt insbesondere bei der Prüfung von Sicherheitselementen, die eine sehr kleine Beschriftung, sogenannte Mikroschrift aufweisen, ein sehr hohes Auflösungsvermögen der jeweiligen Bildsensoren sowie der dazugehörenden Optik voraus, damit eine zuverlässige Zeichenerkennung gewährleistet werden kann.

Es ist Aufgabe der vorliegenden Erfindung, ein Verfahren, eine Vorrichtung sowie ein Wertdokumentbearbeitungsvorrichtung anzugeben, mit welcher die Mikroschrift eines auf dem Wertdokument befindlichen Sicherheitselements auf einfachere und dennoch zuverlässige Weise geprüft werden kann.

Diese Aufgabe wird durch die Vorrichtung, das Verfahren sowie die Wertdokumentbearbeitungsvorrichtung gemäß den beiliegenden Ansprüchen gelöst.

Die erfindungsgemäße Vorrichtung zur Prüfung von Wertdokumenten, insbesondere Banknoten, weist auf: mindestens einen Sensor zur Erfassung von entlang einer Dimension eines Sicherheitselements, mit welchem ein Wertdokument versehen ist, ausgehender elektromagnetischer Strahlung und zur Erzeugung eines der erfassten elektromagnetischen Strahlung entsprechenden Sensorsignalverlaufs entlang der einen Dimension des Sicherheitselements sowie eine Auswertungseinrichtung zur Prüfung des Wertdokuments anhand des Sensorsignalverlaufs entlang der einen Dimension des Sicherheitselements.

Der Sensorsignalverlauf weist entlang der einen Dimension einen Wertebereich aus einer Vielzahl unterschiedlicher Sensorsignalwerte auf. Der Wertebereich kann kontinuierlich oder diskret aus einer Vielzahl möglicher (analogen oder digitalen) Sensorsignalwerte bestehen. Für jede Position entlang der einen Dimension erzeugt der Sensor einen Sensorsignalwert, der der an dieser Position erfassten elektromagnetischen Strahlung entspricht. Entlang der einen Dimension wird aus dem Sensorsignalverlauf ein binärer Signalverlauf erzeugt, der entlang der einen Dimension des Sicherheitselements nur zwei unterschiedliche Signalwerte aufweist. Um aus dem Sensorsignalverlauf den binären Signalverlauf zu ermitteln, wird der Sensorsignalverlauf binärisiert.

Die Auswertungseinrichtung ist dazu ausgebildet ist, das Sicherheitselement des Wertdokuments im Hinblick auf eine Mikroschrift des Sicherheitselements zu prüfen, im Hinblick auf mit Mikroschrift beschriftete und unbeschriftete Abschnitte des Sicherheitselements. Anhand des binären

Signalverlaufs prüft die Auswertungseinrichtung das Sicherheitselement auf das Vorliegen und/oder die Anordnung von mit Mikroschrift beschrifteten Abschnitten des Sicherheitselements und auf das Vorliegen und/oder die Anordnung von unbeschrifteten Abschnitten des Sicherheitselements, die keine Mikroschrift aufweisen.

Das erfindungsgemäße Verfahren zur Prüfung von Wertdokumenten, insbesondere Banknoten, weist folgende Schritte auf: Erfassen elektromagnetischer Strahlung, welche entlang einer Dimension eines Sicherheitselements, mit welchem ein Wertdokument versehen ist, vom Sicherheitselement ausgeht, und Erzeugung eines entsprechenden Sensorsignalverlaufs entlang der einen Dimension des Sicherheitselements aus der erfassten elektromagnetischen Strahlung sowie Prüfung des Wertdokuments anhand des Sensorsignalverlaufs entlang der einen Dimension des Sicherheitselements. Die Prüfung des Wertdokuments wird anhand des Sensorsignalverlaufs entlang der einen Dimension des Sicherheitselements durchgeführt. Dabei wird aus dem Sensorsignalverlauf ein binärer Signalverlauf ermittelt, welcher entlang der einen Dimension des Sicherheitselements nur zwei unterschiedliche Signalwerte aufweist, und das Sicherheitselement wird anhand des binären Signalverlaufs im Hinblick auf eine Mikroschrift des Sicherheitselements geprüft. Die erfindungsgemäße Wertdokumentbearbeitungsvorrichtung weist mindestens eine Vorrichtung zum Bearbeiten, insbesondere zum Befördern und/oder Zählen und/oder Sortieren, von Wertdokumenten, insbesondere Banknoten, auf und zeichnet sich durch die erfindungsgemäße Vorrichtung zum Prüfen von Wertdokumenten aus.

Die Erfindung basiert auf dem Gedanken, zur Prüfung eines Sicherheitselements im Hinblick auf eine Mikroschrift des Sicherheitselements, einen mittels eines Sensors erfassten Intensitätsverlauf der elektromagnetischen Strahlung heranzuziehen, der entlang von nur einer Dimension von dem Sicherheitselement ausgewertet wird. Zur Prüfung der Mikroschrift wird der Verlauf der Intensität der von dem Sicherheitselement ausgehenden, insbesondere der durch das Sicherheitselement transmittierten, elektromagnetischen Strahlung nur entlang genau dieser einer Dimension herangezogen. Anhand des auf diese Weise erhaltenen eindimensionalen Intensitätsverlaufs werden Informationen über den Aufbau des Sicherheitselements entlang dieser einen Dimension hinsichtlich des Vorhandenseins von mit Mikroschrift versehenen Abschnitten und Abschnitten ohne Mikroschrift ermittelt. Auf diese Weises kann eine ggf. vorhandene Mikroschrift des Sicherheitselements geprüft werden, ohne dass hierfür eine Zeichenerkennung der Mikroschrift erforderlich ist.

Anstatt ein zweidimensionales Transmissionsbild einer Zeichenerkennung zu unterziehen, wird erfindungsgemäß also lediglich der erfasste Intensitätsverlauf der vom Sicherheitselement entlang einer Dimension des Sicherheitselements ausgehenden elektromagnetischen Strahlung überprüft. Die Erfindung erlaubt damit eine optische Überprüfung von mit Mikroschrift versehenen Sicherheitselementen, beispielsweise eines mit einer Negativ-Mikroschrift versehenen Sicherheitsfadens, ohne dass das optische Auflösungsvermögen des jeweils verwendeten Sensors, ggf. einschließlich Optik, so groß zu sein hat, dass dieser die Zeichen der Mikroschrift auflösen kann. Vielmehr kann das Auflösungsvermögen des erfindungsgemäß verwendeten Sensors kleiner sein als das für eine Zeichenerkennung der Mikroschrift erforderliche Auflösungsvermögen.

Das Sicherheitselement wird im Hinblick auf die Mikroschrift entlang der einen Dimension geprüft, wobei keine zweidimensionale Bildauswertung im Hinblick auf die Prüfung der Mikroschrift des Sicherheitselement erfolgt.

Die Erfindung erlaubt somit eine Prüfung des auf dem Wertdokument befindlichen Sicherheitselements auf zuverlässige Weise, aber mit geringerem Aufwand.

Vorzugsweise ist der mindestens eine Sensor zur Erfassung der vom Sicherheitselement transmittierten elektromagnetischen Strahlung ausgebildet. Alternativ oder zusätzlich ist es aber auch möglich, die vom Sicherheitselement remittierte, d.h. diffus und/oder gerichtet, reflektierte elektromagnetische Strahlung mittels eines Sensors zu erfassen und in erfindungsgemäßer Weise zur Prüfung des Wertdokuments heranzuziehen. Eine Erfassung der vom Sicherheitselement transmittierten Strahlung ist besonders dann von Vorteil, wenn in das Sicherheitselement Zeichen in Form von Aussparungen eingebracht sind, da sich dann das Transmissionsverhalten von beschrifteten und unbeschrifteten Abschnitten des Sicherheitselements besonders deutlich voneinander unterscheidet. Dies gilt insbesondere dann, wenn die nicht beschrifteten Abschnitte des Sicherheitselements für die zu erfassende elektromagnetische Strahlung im Wesentlichen opak sind.

Es ist ferner bevorzugt, dass mit dem mindestens einen Sensor Infrarotstrahlung erfasst wird. Hierdurch kann die Modulation des Intensitätsverlaufs entlang der einen Dimension des Sicherheitselements mit besonders hoher Zuverlässigkeit erfasst werden. Alternativ oder zusätzlich kann aber auch vorgesehen sein, vom Sicherheitselement ausgehende ultraviolette und/oder sichtbare Strahlung mittels eines entsprechenden Sensors zu erfassen.

Bei einer bevorzugten Ausgestaltung der Erfindung ist die Auswertungseinrichtung derart ausgestaltet, dass aus dem Sensorsignalverlauf ein binärer Signalverlauf entlang der genau einen Dimension des Sicherheitselements ermittelt wird. Aus dem Sensorsignalverlauf wird ein binärer Signalverlauf erzeugt, dessen Signalwerte entlang der einen Dimension des Wertdokuments lediglich zwei unterschiedliche Werte annehmen kann. Die Prüfung des Sicherheitselements anhand eines solchen binären Signalverlaufs, beispielsweise durch Vergleich mit vorgegebenen Referenzsignalverläufen, kann wesentlich zuverlässiger durchgeführt werden als ein Vergleich des ursprünglichen Sensorsignalverlaufs mit einem vorgegebenen Sensorsignalverlauf, da dieser ein Wertebereich aus einer Vielzahl von Werten aufweist und das Sensorsignal selbst deutlichen Schwankungen unterworfen ist.

Die einzelnen Signalwerte des binären Signalverlaufs entlang der einen Dimension des Wertdokuments können beispielsweise nur den Wert 0 oder 1 annehmen. Der binäre Signalverlauf entlang der einen Dimension des Wertdokuments kann dann z.B. wie folgt aussehen: 011010000011010100010. Der Vergleich des auf diese Weise erhaltenen binären Signalverlaufs mit vorgegebenen binären Signalverläufen ist hierbei besonders einfach und zuverlässig realisierbar.

Vorzugsweise weist die Auswertungseinrichtung einen Tiefpassfilter zur Filterung des Sensorsignalverlaufs auf und ist derart ausgestaltet, dass der binäre Signalverlauf aus dem mit dem Tiefpass gefilterten Sensorsignalverlauf ermittelt wird. Durch die Tiefpassfilterung werden höherfrequente Anteile aus dem Sensorsignalverlauf eliminiert, so dass eine niederfrequente Intensitätsmodulation aufgrund von beschrifteten und unbeschrifteten Abschnitten des Sicherheitselements besonders zuverlässig identifiziert werden kann.

Die Auswertungseinrichtung kann auch einen Hochpassfilter zur Filterung des Sensorsignalverlaufs aufweisen. Durch die Hochpassfilterung werden niederfrequente Anteile aus dem Sensorsignalverlauf eliminiert, so dass eine höherfrequente Intensitätsmodulation, wie sie insbesondere innerhalb beschrifteter Abschnitte des Sicherheitselements vorkommt, besonders zuverlässig identifiziert werden kann. Ausgehend von dem hochpassgefilterten Sensorsignalverlauf kann dann ein Feinstruktur-Signalverlauf ermittelt werden, anhand dessen eine Feinstruktur der beschrifteten Abschnitte des Sicherheitselements analysiert werden kann. Der Feinstruktur-Signalverlauf ist charakteristisch für die jeweiligen Mikroschrift-Zeichen innerhalb des jeweiligen beschrifteten Abschnitts. Der Feinstruktur-Signalverlauf kann binär sein oder aus einem Wertebereich mit einer Vielzahl möglicher Werte bestehen.

Ein auf diese Weise gewonnener Feinstruktur-Signalverlauf kann nicht nur zur Prüfung des Sicherheitselements bzw. des Wertdokuments hinsichtlich Echtheit herangezogen werden, sondern auch zur Prüfung des Zustands des Wertdokuments, z.B. der Verschmutzung des Wertdokuments. Banknoten in vergleichsweise gutem Zustand, sog. Fit-Banknoten, zeigen hierbei Modulationen mit größerer Amplitude im Intensitätsverlauf der erfassten elektromagnetischen Strahlung als abgenutzte oder verschmutzte Banknoten, sog. Unfit-Banknoten. Zur Prüfung des Zustands des Wertdokuments wird vorzugsweise ein Feinstruktur-Signalverlauf verwendet, der nicht binär ist, sondern einen Wertebereich aus einer Vielzahl möglicher Werte aufweist.

Der Feinstruktur-Signalverlauf kann auch zur Prüfung der Denomination des Wertdokuments verwendet werden, z.B. falls die Mikroschrift des Sicherheitselements bei verschiedenen Denominationen unterschiedlich ist, z.B. der Denomination entsprechende Mikroschrift-Ziffern aufweist.

Die Binärisierung des Sensorsignalverlaufs kann dadurch erfolgen, dass der Sensorsignalverlauf mit einem ersten Schwellenwert verglichen wird. Die Auswertungseinrichtung ist z.B. derart ausgestaltet, dass der binäre Signalverlauf anhand eines Vergleichs des Sensorsignalverlaufs mit einem ersten Schwellenwert ermittelt wird, wobei der Sensorsignalverlaufs vor dem Vergleichen ggf. mit einem Tiefpass gefiltert wird. Die Sensorsignalwerte des (ggf. Tiefpass-gefilterten) Sensorsignalverlaufs entlang der einen Dimension werden jeweils mit dem ersten Schwellenwert verglichen. Liegt der Sensorsignalwert an der jeweiligen Position über dem ersten Schwellenwert, wird der zugehörige Signalwert des binären Signalverlaufs z.B. auf den Wert 1 gesetzt. Liegt der Sensorsignalwert an der jeweiligen Position dagegen nicht über dem ersten Schwellenwert, wird der zugehörige Signalwert des binären Signalverlaufs z.B. auf den Wert 0 gesetzt. Hierdurch lässt sich auf besonders zuverlässige Weise ein einfach prüfbarer binärer Signalverlauf aus dem Sensorsignalverlauf ermitteln.

Alternativ kann die Binärisierung des Sensorsignalverlaufs kann auch mit Hilfe der Standardabweichung und/oder des Mittelwerts der Sensorsignalwerte entlang der Dimension des Sicherheitselements erreicht werden. Die Auswertungseinrichtung ist z.B. derart ausgebildet, dass aus dem Sensorsignalverlauf ein Verlauf einer Standardabweichung und/ oder eines Mittelwertes entlang der einen Dimension des Sicherheitselements abgeleitet wird und der binäre Signalverlauf anhand des Verlaufs der Standardabweichung bzw. des Mittelwertes ermittelt wird. Hierbei werden die für jeweils eine Position entlang der einen Dimension des Sicherheitselements errechneten Werte der Standardabweichung bzw. des Mittelwerts jeweils anhand aufeinanderfolgender kurzer Abschnitte entlang der einen Dimension des Sicherheitselements ermittelt. Ein solcher kurzer Abschnitt umfasst beispielsweise eine jeweils bestimmte Anzahl, z.B. 50, von Bildpunkten (Pixel). Die Länge dieser Abschnitte (die Anzahl der Pixel), für die der Mittelwert und die Standardabweichung ermittelt wird, wird z.B. in Abhängigkeit der Länge der beschrifteten Abschnitte B des Sicherheitselements gewählt.

Bei dieser Ausführung kann es bevorzugt sein, die Auswertungseinrichtung derart auszubilden, dass der binäre Signalverlauf anhand eines Verlaufs einer relativen Standardabweichung ermittelt wird, welche aus dem Quotienten aus der jeweiligen Standardabweichung und dem jeweiligen Mittelwert entlang der einen Dimension des Sicherheitselements gebildet wird. Im hierbei erhaltenen binären Signalverlauf spiegeln sich beschriftete und unbeschriftete Abschnitte des Sicherheitselements besonders deutlich wieder, was die Prüfung des Wertdokuments besonders zuverlässig macht.

Zum Beispiel ist die Auswertungseinrichtung derart ausgestaltet, dass der binäre Signalverlauf anhand eines Vergleichs des Verlaufs der relativen Standardabweichung mit einem zweiten Schwellenwert ermittelt wird. Analog zu der bereits beschriebenen Ausführung, wird der Signalwert des binären Signalverlaufs z.B. auf den Wert 1 bzw. 0 gesetzt, wenn der entsprechende Wert der relativen Standardabweichung über bzw. unter dem zweiten Schwellenwert liegt. Auch hierdurch wird ein zuverlässig prüfbarer binärer Signalverlauf auf einfache Weise ermittelt.

Bei einer weiteren bevorzugten Ausgestaltung ist die Auswertungseinrichtung derart ausgebildet, dass der binäre Signalverlauf anhand eines Verlaufs einer Schwankungshöhe entlang der einen Dimension des Sicherheitselements ermittelt wird, wobei der Verlauf der Schwankungshöhe aus der Differenz zwischen jeweils einem Maximalwert und einem Minimalwert des Sensorsignalverlaufs entlang der einen Dimension des Sicherheitselements gebildet wird. Vorzugsweise wird der jeweilige Maximal- und Minimalwert hierbei jeweils anhand eines Abschnitts entlang der einen Dimension des Sicherheitselements ermittelt. Ein solcher Abschnitt umfasst beispielsweise eine bestimmte Anzahl von Pixeln. Auch bei dieser Ausgestaltung wird auf einfache und zuverlässige Weise ein leicht prüfbarer binärer Signalverlauf aus dem Sensorsignalverlauf abgeleitet.

Vorzugsweise ist die Auswertungseinrichtung dazu ausgebildet, anhand des Sensorsignalverlaufs bzw. des daraus abgeleiteten binären Signalverlaufs entlang der einen Dimension des Sicherheitselements das Vorhandensein und/oder Eigenschaften unterschiedlicher Abschnitte des Sicherheitselements zu prüfen. Dabei ist es nicht erforderlich, dass von den unterschiedlichen Abschnitten, wie z.B. Abschnitten mit und ohne Zeichen, zweidimensionale Bilder erfasst und analysiert werden. Es reicht vielmehr aus, einen eindimensionalen Intensitätsverlauf der vom Sicherheitselement ausgehenden elektromagnetischen Strahlung zu erfassen und die Intensitätsschwankungen, die sog. Modulation, im Intensitätsverlauf, zu analysieren, um auf das Vorhandensein bzw. bestimmte Eigenschaften beschrifteter und unbeschrifteter Abschnitte schließen zu können.

Bei einer bevorzugten Ausgestaltung der Erfindung ist die Auswertungseinrichtung dazu ausgebildet, eine erste Anzahl von ersten, (mit Mikroschrift) beschrifteten Abschnitten und/ oder eine zweite Anzahl von zweiten, unbeschrifteten Abschnitten des Sicherheitselements zu ermitteln (die keine Mikroschrift aufweisen). Zur Prüfung des Sicherheitselements werden die ermittelte erste Anzahl und/oder zweite Anzahl z.B. mit einer für das Sicherheitselement vorgegebenen ersten Anzahl beschrifteter Abschnitte bzw. mit einer für das Sicherheitselement vorgegebenen zweiten Anzahl unbeschrifteter Abschnitte verglichen. Weist ein Sicherheitselement beispielsweise 10 Zeichen mit jeweils einem zwischen den einzelnen Zeichen befindlichen unbeschrifteten Abschnitt - also insgesamt 9 unbeschrifteten Abschnitten - auf, so beträgt die vorgegebene erste Anzahl 10 und die vorgegebene zweite Anzahl 9. Ergibt die Auswertung des vom Sicherheitselement erhaltenen Sensorsignalverlaufs bzw. des davon abgeleiteten binären Signalverlaufs entlang der einen Dimension, dass insgesamt 10 Abschnitte eine hohe Lichtdurchlässigkeit zeigen und vorzugsweise im binären Signalverlauf z.B. zum Wert 1 führen und insgesamt 9 Abschnitte lichtundurchlässig sind und vorzugsweise im binären Signalverlauf z.B. zum Wert 0 führen, so stimmt die ermittelte erste und zweite Anzahl mit der jeweils vorgegebenen ersten bzw. zweiten Anzahl überein, so dass die Echtheit des Sicherheitselements bejaht werden kann. Eine auf diese Weise vorgenommene Echtheitsprüfung ist trotz einfachen Aufbaus der Vorrichtung bzw. einfacher Durchführung äußerst zuverlässig.

Es ist ferner bevorzugt, die Auswertungseinrichtung dazu auszubilden, mindestens eine erste Länge von ersten Abschnitten und/ oder mindestens eine zweite Länge von zweiten Abschnitten des Sicherheitselements zu ermitteln und die erste Länge bzw. zweite Länge mit mindestens einer vorgegebenen ersten Länge bzw. zweiten Länge zu vergleichen oder aus den ermittelten ersten Längen bzw. zweiten Längen eine erste Gesamtlänge bzw. zweite Gesamtlänge abzuleiten, welche mit der Gesamtlänge des Sicherheitselements entlang der einen Dimension verglichen wird. Auf diese Weise kann die Länge einzelner beschrifteter und/oder unbeschrifteter Abschnitte ermittelt werden und mit entsprechenden vorgegebenen Längen verglichen werden. Alternativ oder zusätzlich können die hierbei ermittelten ersten Längen der beschrifteten Abschnitte und zweiten Längen der unbeschrifteten Abschnitte jeweils aufsummiert werden und mit den jeweiligen Gesamtlängen der beschrifteten bzw. unbeschrifteten Abschnitte verglichen werden. Alternativ oder zusätzlich kann aus den Längen der beschrifteten und unbeschrifteten Abschnitte eine Gesamtlänge ermittelt werden, die dann mit einer vorgegebenen Gesamtlänge von beschrifteten und unbeschrifteten Abschnitten verglichen wird. Auch diese Varianten der Erfindung erlauben eine zuverlässige Echtheitsprüfung bei gleichzeitig einfachem Aufbau der Vorrichtung bzw. einfacher Durchführung des Verfahrens.

Alternativ oder zusätzlich kann die Auswertungseinrichtung dazu ausgebildet sein, eine Lage und/ oder Abfolge von ersten Abschnitten und/ oder zweiten Abschnitten des Sicherheitselements zu ermitteln und die Lage bzw. Abfolge der ersten bzw. zweiten Abschnitte anhand einer vorgegebenen Lage bzw. Abfolge zu überprüfen. Auch diese bevorzugte Ausführung der Erfindung erlaubt eine einfache und zuverlässige Echtheitsprüfung des Sicherheitselements.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: ein Beispiel eines schematischen Aufbaus einer Wertdokumentbearbeitungsvorrichtung;
- Fig. 2: ein Beispiel für ein Wertdokument in Form einer mit Sicherheitselementen versehenen Banknote;
- Fig. 3: Beispiele für einen Sensorsignalverlauf (oben), einen mittels Tiefpass gefilterten Sensorsignalverlauf (Mitte) und einen daraus abgeleiteten binären Signalverlauf (unten); und
- Fig. 4: Beispiele für einen Sensorsignalverlauf (oben), einen mittels Hochpass gefilterten Sensorsignalverlauf (Mitte) und einen daraus abgeleiteten Feinstruktur-Signalverlauf (unten).

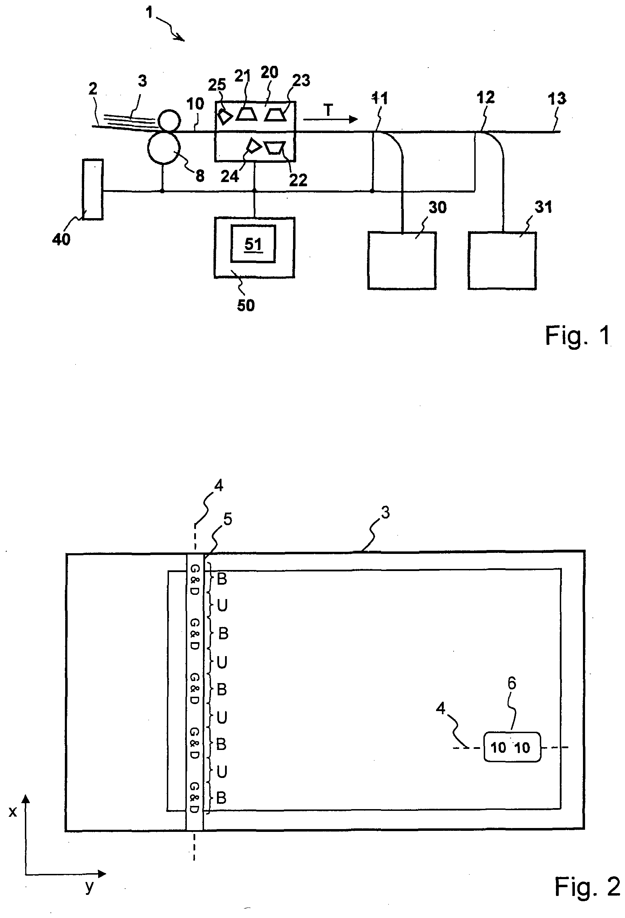

Fig. 1 zeigt ein Beispiel eines schematischen Aufbaus einer Wertdokumentbearbeitungsvorrichtung 1 mit einem Eingabefach 2, in welchem ein Stapel von zu bearbeitenden Wertdokumenten, insbesondere Banknoten 3, bereitgestellt wird, und einem Vereinzeler 8, von welchem nacheinander jeweils eine (z.B. die jeweils unterste) Banknote des eingegebenen Stapels erfasst und an eine - in der gewählten Darstellung nur schematisch wiedergegebene - Transporteinrichtung 10 übergeben wird, welche die Banknote in Transportrichtung T zu einer Sensoreinrichtung 20 befördert.

Die Sensoreinrichtung 20 umfasst im dargestellten Beispiel einen ersten, zweiten und dritten Sensor 21, 22 bzw. 23, welcher jeweils vorzugsweise als sog. Zeilenkamera ausgebildet ist und von der Banknote ausgehendes Licht, insbesondere im sichtbaren und/ oder infraroten und/oder ultravioletten Spektralbereich, mittels entlang einer Zeile angeordneter Sensorelemente erfasst und in entsprechende Sensorsignale umwandelt.

Im dargestellten Beispiel erfassen der erste und zweite Sensor 21 bzw. 22 von der Vorderseite bzw. Rückseite der Banknote remittiertes, d.h. diffus und/oder gerichtet reflektiertes, Licht. Die Beleuchtung der Banknote erfolgt mittels beidseitig der Banknote angeordneter Lichtquellen 24, 25. Der im Bereich der Vorderseite der Banknote befindliche dritte Sensor 23 erfasst das von der Lichtquelle 24 abgegebene, vorzugsweise schräg auf die Banknote treffende und durch die Banknote hindurchtretende, d.h. transmittierte, Licht. Die Sensoren 21-23 wandeln das detektierte Licht in entsprechende Sensorsignale um. Der erste und zweite Sensor 21 bzw. 22 werden daher auch als Remissionskameras und der dritte Sensor 23 wird daher auch als Transmissionskamera bezeichnet.

Vorzugsweise verläuft die Zeile mit den Sensorelementen des jeweiligen Sensors 21, 22 bzw. 23 im Wesentlichen senkrecht zur Transportrichtung T der Banknoten, so dass bei jedem Auslesevorgang der Sensorzeile des jeweiligen Sensors 21, 22 bzw. 23 ein Sensorsignalverlauf entlang der Sensorzeile erhalten wird, welcher einem Intensitätsverlauf des Lichts entspricht, das in einer senkrecht zur Transportrichtung T verlaufenden Richtung von der Banknote transmittiert bzw. remittiert wird.

Die von den Sensoren 21 bis 23 der Sensoreinrichtung 20 erzeugten Sensorsignale, insbesondere Sensorsignalverläufe, werden an eine Steuerungseinrichtung 50 sowie eine Auswertungseinrichtung 51 weitergeleitet. Die Auswertungseinrichtung 51 kann in der Steuerungseinrichtung 50 enthalten sein oder aber auch eine von der Steuerungseinrichtung 50 separate Einheit bilden.

In der Auswertungseinrichtung 51 werden die Sensorsignale nach einer etwaigen Vorverarbeitung zur Prüfung der Banknote herangezogen, wobei aus den jeweiligen Sensorsignalen Aussagen über verschiedene Eigenschaften der jeweiligen Banknote abgeleitet werden, wie z. B. Stückelung, Emission, Lage, Länge und Breite, Infraroteigenschaften, Wasserzeichen, Vorhandensein bzw. Eigenschaften von zusätzlichen Sicherheitselementen, wie z. B. Sicherheitsfäden und/oder Hologrammen, Löcher, Risse und fehlende Teile, Verschmutzungsgrad, Eselsohren, Flecken, Graffiti sowie ganzflächige Einfärbungen, Abrieb der Druckfarbe und Seriennummer.

Abhängig von den in der Auswertungseinrichtung 51 ermittelten Eigenschaften der jeweiligen Banknote werden die Transporteinrichtung 10 sowie die Weichen 11 und 12 entlang der Transportstrecke durch die Steuerungseinrichtung 50 derart gesteuert, dass die Banknote einem von mehreren Ausgabefächern 30 und 31 zugeführt und dort abgelegt wird. Beispielsweise werden in einem ersten Ausgabefach 30 Banknoten abgelegt, die als echt erkannt wurden, während als unecht oder fälschungsverdächtig eingestufte Banknoten in einem zweiten Ausgabefach 31 abgelegt werden.

Durch die Bezugsziffer 13 am Ende der dargestellten Transportstrecke soll angedeutet werden, dass weitere Ausgabefächer und/oder andere Einrichtungen, beispielsweise zur Aufbewahrung oder zur Zerstörung von Banknoten, vorgesehen sein können, wie z. B. Kassetten zur geschützten Aufbewahrung der Banknoten oder ein Schredder. Falls beispielsweise eine Banknote nicht erkannt werden konnte, so kann für diese ein besonderes Ausgabefach vorgesehen sein, in welches derartige Banknoten abgelegt und für eine gesonderte Behandlung, beispielsweise durch eine Bedienperson, bereitgestellt werden.

Die Wertdokumentbearbeitungsvorrichtung 1 umfasst im dargestellten Beispiel ferner eine Ein-/Ausgabeeinrichtung 40 zur Eingabe von Daten und/oder Steuerungsbefehlen durch eine Bedienperson, beispielsweise mittels einer Tastatur oder eines Touchscreens, und Ausgabe oder Anzeige von Daten und/oder Informationen zum Bearbeitungsprozess, insbesondere zu den jeweils bearbeiteten Banknoten.

Das beispielhaft gezeigte Wertdokumentbearbeitungsvorrichtung 1 ist besonders dazu geeignet, auf Wertdokumenten befindliche Sicherheitselemente, wie z.B. Sicherheitsfäden, zu prüfen, um Rückschlüsse auf die Echtheit und/ oder Denomination des jeweiligen Wertdokuments zu ermöglichen. Dies wird im Folgenden näher erläutert.

Fig. 2 zeigt ein Beispiel für ein Wertdokument in Form einer Banknote 3, welche mit einem ersten und zweiten Sicherheitselement 5 und 6 versehen ist.

Bei dem ersten Sicherheitselement 5 handelt es sich um einen Sicherheitsfaden, welcher im vorliegenden Beispiel entlang einer ersten Dimension x parallel zur schmalen Seite und senkrecht zu einer zweiten Dimension y in Richtung der Längsseite der Banknote 3 verläuft und mit Zeichen, in diesem Fall Buchstaben und Symbolen, in Form einer sog. Negativ-Mikroschrift versehen ist, bei welcher die jeweiligen Zeichen durch Ausnehmungen in einer lichtundurchlässigen Schicht des Sicherheitsfadens gebildet werden.

Unter einem Sicherheitsfaden ist hierbei jede Art von Sicherheitselementen zu verstehen, welche in einer ersten Dimension, d.h. der Längsrichtung, eine wesentlich größere Ausdehnung aufweisen als in einer dazu senkrecht verlaufenden zweiten Dimension, d.h. der Breite, des Sicherheitsfadens..

Vorzugsweise ist der außerhalb der Ausnehmungen befindliche Bereich des Sicherheitsfaden für elektromagnetische Strahlung im infraroten und/ oder sichtbaren und/ oder ultravioletten Spektralbereich undurchlässig, so dass die elektromagnetische Strahlung lediglich im Bereich der Ausnehmungen der jeweiligen Zeichen durch den Sicherheitsfaden hindurchtreten kann. Vorzugsweise weist der Sicherheitsfaden hierbei mindestens eine Schicht auf, in welcher ein metallisches Material enthalten ist. Beispielsweise weist der Sicherheitsfaden eine Trägerschicht auf, welche mit einer metallischen Schicht versehen ist und ggf. zusätzlich mit einer magnetischen Schicht mit magnetischen Pigmenten. Die Zeichen im Sicherheitsfaden werden dann durch entsprechende Ausnehmungen bzw. Durchbrüche in diesem Schichtsystem gebildet.

Der Sicherheitsfaden weist mit jeweils einer Zeichenfolge versehene beschriftete Abschnitte B sowie unbeschriftete Abschnitte U ohne Zeichen auf. Im dargestellten Beispiel sind dies insgesamt fünf beschriftete Abschnitte B und vier nicht beschriftete Abschnitte U. Im Sinne der Erfindung kann aber auch ein Abschnitt mit nur einem Zeichen als beschrifteter Abschnitt verstanden werden.

Das für das erste Sicherheitselement 5 in Form eines Sicherheitsfaden Gesagte gilt entsprechend auch für das zweite Sicherheitselement 6 in Form eines Rechtecks mit abgerundeten Ecken, welches im vorliegenden Beispiel Ziffern aufweist, die auf dem zweiten Sicherheitselement 6 ausgebildet sind.

Erfindungsgemäß wird mit mindestens einem der Sensoren 21 bis 23 (siehe Fig. 1) das entlang einer Dimension des jeweiligen Sicherheitselements 5 bzw. 6 ausgehende Licht erfasst, in einen entsprechenden Sensorsignalverlauf entlang der einen Dimension des Sicherheitselements 5 bzw. 6 umgewandelt und der Auswertungseinrichtung 51 zugeführt und dort zum Zwecke der Echtheitsprüfung und/oder Denominationserkennung des Sicherheitselements bzw. der Banknote analysiert.

Im Falle des als Sicherheitsfaden ausgebildeten ersten Sicherheitselements 5 handelt es sich bei der Dimension, entlang welcher das vom Sicherheitsfaden ausgehende Licht erfasst wird, um die Längsrichtung x des Sicherheitsfadens, welche im Beispiel der Fig. 2 parallel zur Breite der Banknote 3 verläuft. Vorzugsweise wird hierbei das im Bereich der Mitte des Sicherheitsfadens entlang der Richtung x transmittierte und/oder remittierte Licht erfasst. Die Sensorzeile des entsprechenden Sensors 21, 22 bzw. 23 (siehe Fig. 1) verläuft hierbei im Wesentlichen entlang der in der Fig. 2 gestrichelt angedeuteten Mittelinie 4.

Im Falle des zweiten Sicherheitselements 6 wird ein Sensorsignalverlauf vorzugsweise in y-Richtung ermittelt. und ein entsprechender Sensorsignalverlauf entlang der y-Richtung erzeugt und analysiert.

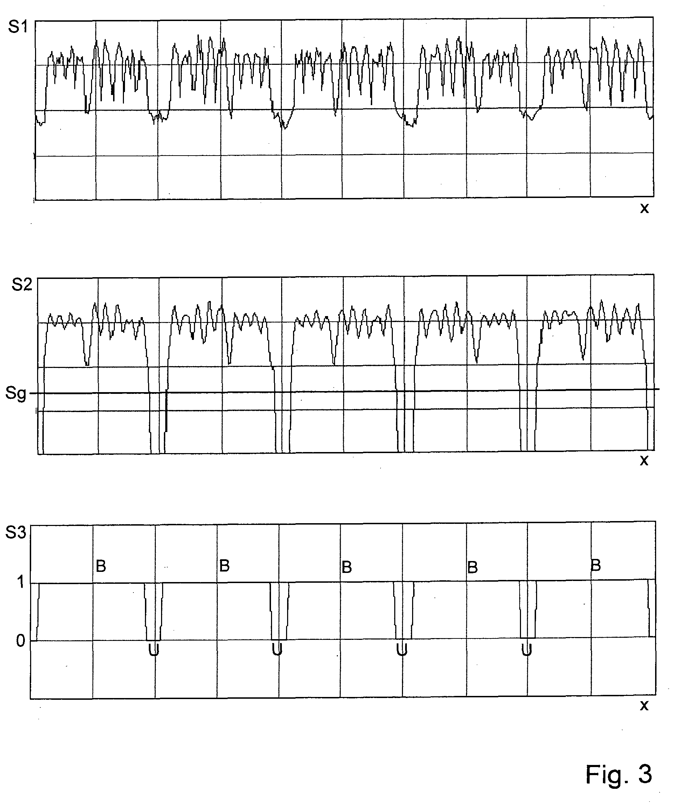

Der obere Teil der Fig. 3 zeigt ein Beispiel für einen mittels der Transmissionskamera 23 (siehe Fig. 1) erfassten Sensorsignalverlauf S1 entlang der Längsrichtung x des als Sicherheitsfaden ausgebildeten ersten Sicherheitselements 5. Der Sensorsignalverlauf S1 entspricht in diesem Fall der vom Sicherheitsfaden transmittierten Infrarotlichtintensität. Längere Abschnitte mit höheren, stark variierenden Transmissionswerten wechseln sich hierbei mit Abschnitten niedrigerer Transmission ab, wobei Erstere den beschrifteten Abschnitten B und Letztere den unbeschrifteten Abschnitten U des Sicherheitsfadens entlang der Längsrichtung x entsprechen.

Der Sensorsignalverlauf S1 wird einer Tiefpassfilterung unterzogen, durch welche höherfrequente Intensitätsschwankungen eliminiert und niedrigerfrequente Intensitätsschwankungen durchgelassen werden. Der hierbei erhaltene gefilterte Sensorsignalverlauf S2 entlang der Längsrichtung x des Sicherheitsfadens ist im mittleren Teil der Fig. 3 dargestellt. Bereiche niedriger Transmission unterscheiden sich hierbei wesentlich deutlicher von Bereichen höherer Transmission, als dies im ursprünglichen Sensorsignalverlauf S1 der Fall ist.

In einem weiteren Verarbeitungsschritt werden die einzelnen Sensorsignalwerte des gefilterten Sensorsignalverlaufs S2 entlang der Längsrichtung x des Sicherheitsfadens mit einem Schwellenwert Sg verglichen. Liegt der jeweilige Sensorsignalwert über dem Schwellenwert Sg, so wird ein Signalwert auf den Wert 1 gesetzt. Ist dagegen der Sensorsignalwert gleich oder kleiner als der Schwellenwert Sg, wird ein entsprechender Signalwert auf den Wert 0 gesetzt. Diese Vergleichsoperation wird für den gesamten gefilterten Sensorsignalverlauf 2 entlang der Längsrichtung x durchgeführt, wobei ein Verlauf der ermittelten Signalwerte, d.h. ein binärer Signalverlauf S3, entlang der Längsrichtung x des Sicherheitsfadens erhalten wird, welcher lediglich zwei unterschiedliche Werte, nämlich 1 oder 0, aufweist. Wie anhand des im unteren Teil der Fig. 3 gezeigten binären Signalverlaufs S3 zu erkennen ist, können darin beschriftete Abschnitte B des Sicherheitsfadens (Signalwert 1) sowie unbeschriftete Abschnitte U des Sicherheitsfadens (Signalwert 0) und deren absolute Lage entlang der Längsrichtung x einfach und eindeutig identifiziert werden.

Das vorstehend beschriebene Verfahren zur Ableitung des binären Signalverlaufs S3 vom ursprünglichen Sensorsignalverlauf S1 stellt eine besonders bevorzugte Methode zur Ermittlung des binären Signalverlaufs S3 dar. Alternativ kann der binäre Signalverlauf S3 auch ohne Tiefpassfilterung, direkt aus dem Sensorsignalverlauf S1 erzeugt werden, z.B. durch Vergleichen des Sensorsignalverlaufs S1 selbst mit einer Schwelle Sg.

Alternativ können aus dem Sensorsignalverlauf S1 aber auch Werte für die Standardabweichung und den Mittelwert der Transmissionsintensität als Funktion des Ortes x entlang des Sicherheitsfadens gebildet werden, beispielsweise für jeweils einen bestimmten Pixel-Abschnitt entlang der Längsrichtung x. Aus den ermittelten Werten der Standardabweichung bzw. des Mittelwerts wird dann eine relative Standardabweichung des Intensitätsverlaufs entlang der Längsrichtung x für den Pixel-Abschnitt berechnet, indem der Quotient aus dem jeweiligen Wert der Standardabweichung und dem Mittelwert gebildet wird. Die relative Standardabweichung kann dann ebenfalls mit einem Schwellenwert verglichen werden, wodurch analog zur oben näher beschriebenen Methode ebenfalls ein binärer Signalverlauf erhalten wird.

Bei einer weiteren Variante ist es möglich, anstelle der Standardabweichung eine Schwankungshöhe zu verwenden, welche aus der Differenz eines Maximalwerts und eines Minimalwerts der Transmissionsintensität über den jeweiligen Pixel-Abschnitten bestimmt wird.

Wie bereits erwähnt, wird der Intensitätsverlauf des vom Sicherheitsfaden ausgehenden, insbesondere transmittierten, Lichts vorzugsweise entlang einer Linie ermittelt, welche in Längsrichtung x in der Mitte des Sicherheitsfadens verläuft (siehe Mittellinie 4 in Fig. 2). Im Vergleich zu einer Erfassung des Lichts über die gesamte Breite des Sicherheitsfadens in y-Richtung wird hierbei der besondere Vorteil erzielt, dass die Sensorzeile des jeweiligen Sensors 21, 22 bzw. 23, trotz Schwankungen der Sicherheitsfadenposition auf der jeweils zu prüfenden Banknote, stets zuverlässig über dem zu prüfenden Sicherheitsfaden und der darauf befindlichen Mikroschrift liegt.

Grundsätzlich können auch mehrere mittig liegende Sensorsignalverläufe erfasst und zu einem Sensorsignalverlauf zusammengefasst werden und in der beschriebenen Weise ausgewertet werden. Alternativ ist es auch möglich, zwei oder mehrere Sensorsignalverläufe entlang der Längsrichtung x des Sicherheitsfadens getrennt voneinander in der oben beschriebenen Weise auszuwerten bzw. zu prüfen.

Anhand des binären Signalverlaufs S3 kann auf einfache und zuverlässige Weise ermittelt werden, ob der Sicherheitsfaden überhaupt beschriftete Abschnitte B aufweist, indem beispielsweise geprüft wird, ob der erste Binärwert, d.h. 0 oder 1, überhaupt vorkommt. Falls beispielsweise eine jeweils zu prüfende Banknotensorte mit Sicherheitsfäden ausgestattet ist, welche eine Mikroschrift aufweisen, bei einer konkret geprüften Banknote jedoch der erste Binärwert, d.h. 0 bzw. 1, nicht vorkommt, wird die Echtheit der geprüften Banknote verneint.

Ferner ist es möglich, die aus dem binären Signalverlauf S3 die Anzahl der beschrifteten Abschnitte B und unbeschrifteten Abschnitte U zu ermitteln und mit einer jeweils hinterlegten Anzahl zu vergleichen. Im vorliegenden Beispiel würde also eine erste Anzahl von 5 beschrifteten Abschnitten B sowie eine zweite Anzahl von 4 unbeschrifteten Abschnitten U mit einer entsprechenden vorgegebenen ersten bzw. zweiten Anzahl verglichen werden. Stimmen diese Anzahlen nicht überein, so wird die Banknote als falsch eingestuft. Die vorgegebene Anzahl kann auch einen Wertebereich umfasssen, um zu berücksichtigen, dass die x-Position der Beschriftung des Sicherheitsfaden variieren kann. Zum Beispiel können 4-6 beschriftete Abschnitte als gültig bewertet werden.

Alternativ oder zusätzlich ist es möglich, die absolute Länge oder den Längenanteil der beschrifteten Abschnitte B und/ oder der unbeschrifteten Abschnitte U entlang der Längsrichtung x des Sicherheitsfadens zu ermitteln und mit entsprechenden vorgegebenen Werten zu vergleichen. Beispielsweise können hierbei die Längen der unbeschrifteten und beschrifteten Abschnitte addiert werden und die Summe der Längen der beschrifteten Abschnitte und die Summe der Längen der unbeschrifteten Abschnitte überprüft werden, z.B. im Verhältnis zu der gesamten Sicherheitsfadenlänge. Beispielsweise wird der prozentuale Anteil der beschrifteten bzw. unbeschrifteten Abschnitte an der gesamten Sicherheitsfadenlänge überprüft und mit vorgegebenen Werten verglichen. Es kann auch das Verhältnis zwischen der aufsummierten Länge der unbeschrifteten Abschnitte und der aufsummierten Länge der beschrifteten Abschnitte überprüft werden.

Alternativ oder zusätzlich kann vorgesehen sein, dass die absolute und/oder relative Lage der beschrifteten Abschnitte B entlang der Längsrichtung x des Sicherheitsfadens und/oder eine Abfolge von beschrifteten Abschnitten B und unbeschrifteten Abschnitten U entlang der Längsrichtung x des Sicherheitsfadens überprüft wird, indem die jeweils ermittelte Lage bzw. Abfolge z.B. mit entsprechenden vorgegebenen Lage bzw. Abfolge verglichen wird.

Beispielsweise kann dazu der binäre Signalverlauf S3 mit einem vorgegebenen Referenzsignalverlauf verglichen werden, welcher für den Sicherheitsfaden der jeweiligen Banknotensorte hinterlegt ist. Da die relative Lage der beschrifteten und unbeschrifteten Abschnitte B bzw. U bei der jeweils zu prüfenden Banknote in der Regel unbekannt ist, da die Lage des Sicherheitsfadens im Allgemeinen in Längsrichtung variiert, wird der ermittelte binäre Signalverlauf S3 entlang der Längsrichtung x schrittweise über den jeweiligen Referenzsignalverlauf geschoben und dabei z.B. jeweils eine Korrelation berechnet. Falls der ermittelte binäre Signalverlauf S3 und der vorgegebene Referenzsignalverlauf auf diese Weise durch Verschieben in Übereinstimmung gebracht werden können - die Korrelation liefert in diesem Fall einen hohen Wert -, wird die Banknote als echt eingestuft bzw. die zugehörige Denomination bestätigt. Andernfalls wird die Banknote als Fälschung identifiziert.

Alternativ oder zusätzlich zur oben beschriebenen Auswertung des Sensorsignalverlaufs S1 kann dieser auch hinsichtlich seiner Feinstruktur analysiert werden, indem auch Schwankungen der transmittierten Lichtintensität innerhalb der beschrifteten Abschnitte B ausgewertet werden. Diese Schwankungen werden durch die Form, den Abstand und die Größe der jeweiligen Zeichen der verwendeten Mikroschrift beeinflusst. Dies wird im Folgenden näher erläutert.

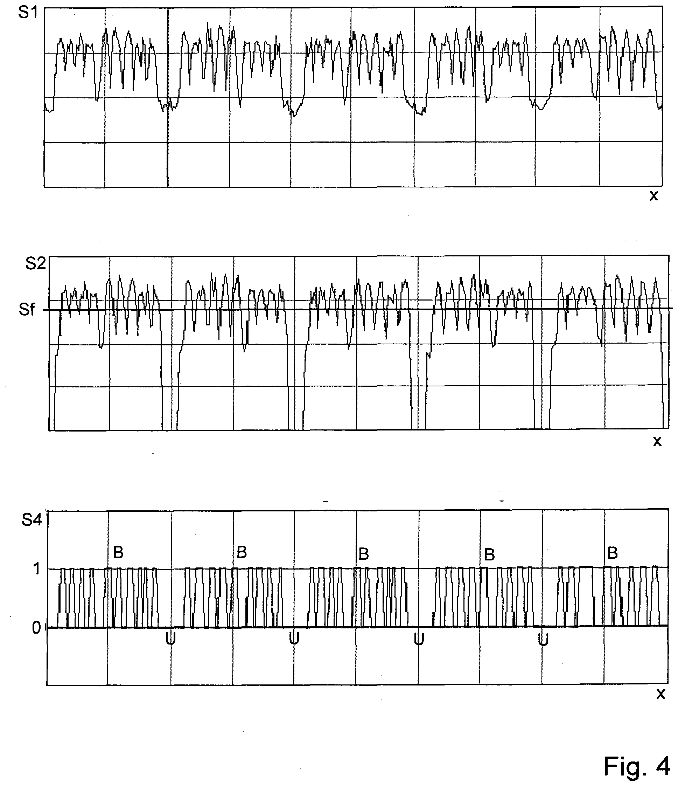

Der obere Teil von Fig. 4 zeigt einen Sensorsignalverlauf S1 entlang der Längsrichtung x des Sicherheitsfadens. Um die Feinstruktur des Sensorsignalverlaufs S1 besser analysieren zu können, kann dieser zunächst einer Hochpassfilterung unterzogen werden, durch welche höherfrequente Anteile im Sensorsignalverlauf S1 erhalten bleiben, wohingegen niederfrequente Anteile abgeschwächt werden. Ein Beispiel für einen entsprechend gefilterten Sensorsignalverlauf S2 ist im mittleren Teil der Fig. 4 dargestellt.

Um die Höhe der Intensitätsschwankungen innerhalb der beschrifteten Abschnitte B auszuwerten, wird beispielsweise die jeweilige Standardabweichung oder relative Standardabweichung des Intensitätsverlaufs gebildet. Die obenstehenden Erläuterungen im Zusammenhang mit der Auswertung des im mittleren Teil der Fig. 3 dargestellten gefilterten Sensorsignalverlaufs gelten hierbei entsprechend. Alternativ ist es auch möglich, die Schwankung zwischen Minimal- und Maximalwerten innerhalb der jeweils beschrifteten Abschnitte B zu berechnen, indem beispielsweise die Differenz aus dem jeweiligen Maximal- und Minimalwert gebildet wird oder eine auf den jeweiligen Mittelwert bezogene relative Schwankung errechnet wird.

Die hierbei ermittelten Schwankungen werden dann beispielsweise daraufhin geprüft, ob sie innerhalb eines vorgegebenen Wertebereichs liegen.

Vorteilhafterweise kann die Auswertung der Feinstruktur des Transmissionsintensitätsverlaufs auch für die sogenannte Fitnessprüfung, d.h. Zustandsprüfung, der Banknoten verwendet werden. Wie bei Versuchen überraschenderweise festgestellt worden ist, ist die Höhe der Intensitätsschwankungen im Bereich beschrifteter Abschnitte B bei sogenannten Unfit-Banknoten, welche bereits einen relativ hohen Abnutzungsgrad aufweisen, signifikant geringer als bei sogenannten Fit-Banknoten, welche in einem vergleichsweise guten Zustand sind. Die Höhe der ermittelten Intensitätsschwankungen kann bei der Fitnessprüfung beispielsweise ebenfalls mit einem vorgegebenen Schwellenwert verglichen werden. Liegen die Intensitätsschwankungen über diesem Schwellenwert, so kann die Banknote als fit eingestuft werden, andernfalls als unfit.

Beispielsweise wird aus dem gefilterten Sensorsignalverlauf S2 (siehe mittlerer Teil der Fig. 4) ein binärer Feinstruktur-Signalverlauf S4 ermittelt, indem der hochpassgefilterte Sensorsignalverlauf S2 mit einem Schwellenwert Sf verglichen wird, welcher in diesem Fall im Bereich der Intensitätsschwankungen der jeweils beschrifteten Abschnitte liegt. Sensorsignalwerte, welche oberhalb des Schwellenwerts Sf liegen, führen zu einem Signalwert von 1, wohingegen Sensorsignalwerte gleich oder unterhalb des Schwellenwerts Sf zu einem Signalwert von 0 führen. Ein aus den ermittelten Signalwerten entlang der Längsrichtung x des Sicherheitsfadens gebildeter binäre Feinstruktur-Signalverlauf S4 ist im unteren Teil der Fig. 4 gezeigt.

Die Lage und Abfolge der einzelnen Signalwerte, insbesondere der Signalwerte mit einem Wert von 1, in den einzelnen beschrifteten Abschnitten B wird beispielsweise dadurch geprüft, dass der Feinstruktur-Signalverlauf S4 entlang der Längsrichtung x des Sicherheitsfadens, gegebenenfalls abschnittsweise, mit einem Referenzsignalverlauf verglichen wird. Die oben stehenden Ausführungen im Zusammenhang mit dem in Fig. 3 gezeigten Beispiel gelten hierbei entsprechend.

Alternativ oder zusätzlich können die jeweiligen Feinstruktur-Signalverläufe S4 in den einzelnen beschrifteten Abschnitten B auch miteinander verglichen werden, beispielsweise dahingehend, ob die Lage und Abfolge der einzelnen Signalwerte mit einem Wert von 1 in den einzelnen beschrifteten Abschnitten B miteinander übereinstimmt. Dazu werden die Feinstruktur-Signalverläufe S4 jeweils zweier beschrifteter Abschnitte B miteinander korreliert und überprüft, ob der errechnete Korrelationswert einen Mindestwert überschreitet. Diese Prüfung ist besonders dann von Vorteil, wenn die auf dem Sicherheitsfaden befindliche Beschriftung aus sich wiederholenden Abschnitten besteht, so dass der jeweilige Intensitätsverlauf zweier beschrifteter Abschnitte B im Wesentlichen übereinstimmt.

Es sind aber auch denkbar, anhand der Feinstruktur die Spiegelsymmetrie eines spiegelsymmetrisch beschrifteten Sicherheitsfadens zu prüfen, bei welchem der Intensitätsverlauf eines beschrifteten Abschnitts B in umgekehrter Richtung identisch ist mit dem Intensitätsverlauf des dazu spiegelsymmetrisch beschrifteten Abschnitts B. Durch Vergleichen der Feinstruktur-Signalverläufe S4 zweier beschrifteter Abschnitte B, z.B. mittels Korrelation, kann die Spiegelsymmetrie der Mikroschrift dieser Abschnitte überprüft werden.

## Patentansprüche

1. Vorrichtung zur Prüfung des Sicherheitselements eines Wertdokuments, insbesondere einer Banknote (3), mit
- mindestens einem Sensor (21 - 23) zur Erfassung von entlang einer Dimension (x, y) des Sicherheitselements (5, 6) ausgehender elektromagnetischer Strahlung und zur Erzeugung eines der erfassten elektromagnetischen Strahlung entsprechenden Sensorsignalverlaufs (S1) entlang der einen Dimension (x, y) des Sicherheitselements (5, 6) und
- einer Auswertungseinrichtung (51) zur Prüfung des Wertdokuments, die dazu ausgebildet ist, aus dem Sensorsignalverlauf (S1) einen binären Signalverlauf (S3) zu ermitteln, welcher entlang der einen Dimension (x, y) des Sicherheitselements (5) nur zwei unterschiedliche Signalwerte (0, 1) aufweist,
**dadurch gekennzeichnet, dass** die Auswertungseinrichtung (31) dazu ausgebildet ist, das Sicherheitselement (5, 6) anhand des binären Signalverlaufs (S3) im Hinblick auf eine Mikroschrift des Sicherheitselements zu prüfen, wobei die Auswertungseinrichtung (51) dazu ausgebildet ist, das Sicherheitselement (5, 6) anhand des binären Signalverlaufs (S3) auf das Vorliegen und/oder die Anordnung von mit Mikroschrift beschrifteten und unbeschrifteten Abschnitten (B, U) des Sicherheitselements zu prüfen.

2. Vorrichtung nach Anspruch 1, wobei die Auswertungseinrichtung das Sicherheitselement (5, 6) im Hinblick auf die Mikroschrift nur entlang der einen Dimension prüft.

3. Vorrichtung nach einem der vorhergehenden Ansprüche, wobei die Auswertungseinrichtung (51) derart ausgestaltet ist, dass der binäre Signalverlauf (S3) anhand eines Vergleichs des Sensorsignalverlaufs (S1) mit einem ersten Schwellenwert (Sg) ermittelt wird.

4. Vorrichtung nach einem der vorhergehenden Ansprüche, wobei die Auswertungseinrichtung (51) einen Tiefpassfilter zur Filterung des Sensorsignalverlaufs (S1) aufweist und derart ausgestaltet ist, dass der binäre Signalverlauf (S3) aus dem mit dem Tiefpassfilter gefilterten Sensorsignalverlauf (S2) ermittelt wird.

5. Vorrichtung nach einem der vorhergehenden Ansprüche, wobei die Auswertungseinrichtung (51) derart ausgebildet ist, dass aus dem Sensorsignalverlauf (S1) ein Verlauf einer Standardabweichung des Sensorsignalverlaufs und/oder eines Mittelwertes des Sensorsignalverlaufs entlang der einen Dimension (x, y) des Sicherheitselements (5, 6) ermittelt wird und der binäre Signalverlauf (S3) anhand des Verlaufs der Standardabweichung bzw. des Mittelwertes des Sensorsignals ermittelt wird.

6. Vorrichtung nach Anspruch 5, wobei die Auswertungseinrichtung (51) derart ausgebildet ist, dass der binäre Signalverlauf (S3) anhand eines Verlaufs einer relativen Standardabweichung des Sensorsignalverlaufs (S1) ermittelt wird, welche aus dem Quotienten aus der jeweiligen Standardabweichung des Sensorsignalverlaufs und dem jeweiligen Mittelwert des Sensorsignalverlaufs entlang der einen Dimension (x, y) des Sicherheitselements (5, 6) gebildet wird.

7. Vorrichtung nach einem der vorangehenden Ansprüche, wobei die Auswertungseinrichtung (51) dazu ausgebildet ist, anhand des binären Signalverlaufs (S3) entlang der einen Dimension (x, y) des Sicherheitselements (5) das Vorhandensein und/oder Eigenschaften von mit Mikroschrift beschrifteten und unbeschrifteten Abschnitte (B, U) des Sicherheitselements (5, 6) zu prüfen.

8. Vorrichtung nach einem der vorhergehenden Ansprüche, die Auswertungseinrichtung dazu ausgebildet ist, aus dem Sensorsignalverlauf (S1) zusätzlich ein Feinstruktur-Signalverlauf (S4) entlang der einen Dimension zu ermitteln, anhand dessen eine Feinstruktur der mit Mikroschrift beschrifteten Abschnitte (B) des Sicherheitselements analysiert werden kann, die charakteristisch ist für die Mikroschrift-Zeichen innerhalb des jeweiligen beschrifteten Abschnitts (B).

9. Vorrichtung nach Anspruch 8, wobei die Auswertungseinrichtung (51) dazu ausgebildet ist, den Feinstruktur-Signalverlauf (S4) zur Prüfung des Wertdokuments heranzuziehen, insbesondere zur Prüfung der Denomination und/oder des Zustands des Wertdokuments.

10. Vorrichtung nach einem der Ansprüche 7 bis 9, wobei die Auswertungseinrichtung (51) dazu ausgebildet ist, eine erste Anzahl der mit Mikroschrift beschrifteten Abschnitten (B) und/ oder eine zweite Anzahl der unbeschrifteten Abschnitten (U) des Sicherheitselements (5, 6) zu ermitteln und die erste Anzahl bzw. zweite Anzahl mit einer vorgegebenen ersten Anzahl bzw. vorgegebenen zweiten Anzahl zu vergleichen.

11. Vorrichtung nach einem der Anspruch 7 bis 10, wobei die Auswertungseinrichtung (51) dazu ausgebildet ist, mindestens eine erste Länge der beschrifteten Abschnitte (B) und/oder mindestens eine zweite Länge der unbeschrifteten Abschnitte (U) des Sicherheitselements (5, 6) zu ermitteln und die erste Länge bzw. zweite Länge mit mindestens einer vorgegebenen ersten Länge bzw. zweiten Länge zu vergleichen oder aus den ermittelten ersten Längen bzw. zweiten Längen eine erste Gesamtlänge bzw. zweite Gesamtlänge abzuleiten, welche mit der Gesamtlänge des Sicherheitselements (5, 6) entlang der einen Dimension (x, y) verglichen wird.

12. Vorrichtung nach einem der Ansprüche 7 bis 11, wobei die Auswertungseinrichtung (51) dazu ausgebildet ist, eine Lage und/oder Abfolge der beschrifteten Abschnitte (B) und/oder der unbeschrifteten Abschnitte (U) des Sicherheitselements (5, 6) zu ermitteln und die Lage bzw. Abfolge der beschrifteten bzw. unbeschrifteten Abschnitte (B bzw. U) anhand einer vorgegebenen Lage bzw. Abfolge zu überprüfen.

13. Wertdokumentbearbeitungsvorrichtung (1) mit mindestens einer Vorrichtung (2, 8, 10 - 13, 30, 31, 50) zum Bearbeiten, insbesondere zum Befördern und/ oder Zählen und/oder Sortieren, von Wertdokumenten (3) und mit einer Vorrichtung (21 - 23, 51) zur Prüfung des Sicherheitselements eines Wertdokuments nach einem der vorangehenden Ansprüche.

14. Verfahren zur Prüfung des Sicherheitselements eines Wertdokuments, mit folgenden Schritten:
- Erfassen elektromagnetischer Strahlung, welche entlang einer Dimension (x, y) des Sicherheitselements (5, 6) von dem Sicherheitselement (5, 6) ausgeht, und Erzeugung eines entsprechenden Sensorsignalverlaufs (S1) entlang der einen Dimension (x, y) des Sicherheitselements (5, 6) aus der erfassten elektromagnetischen Strahlung und
- Prüfung des Wertdokuments anhand des Sensorsignalverlaufs (S1) entlang der einen Dimension (x, y) des Sicherheitselements (5, 6), wobei aus dem Sensorsignalverlauf (S1) ein binärer Signalverlauf (S3) ermittelt wird, welcher entlang der einen Dimension (x, y) des Sicherheitselements nur zwei unterschiedliche Signalwerte (0, 1) aufweist, und wobei das Sicherheitselement (5, 6) anhand des binären Signalverlaufs (S3) im Hinblick auf eine Mikroschrift des Sicherheitselements geprüft wird, wobei das Sicherheitselement (5, 6) anhand des binären Signalverlaufs (S3) auf das Vorliegen und/ oder die Anordnung von mit Mikroschrift beschrifteten und unbeschrifteten Abschnitten (B, U) des Sicherheitselements geprüft wird .

## Claims

1. An apparatus for checking the security element of a value document, in particular of a bank note (3), with
- at least one sensor (21-23) for capturing electromagnetic radiation emanating from along a dimension (x, y) of the security element (5, 6) and for generating a sensor signal pattern (S1) along said dimension (x, y) of the security element (5, 6), which corresponds to the captured electromagnetic radiation, and
- an evaluation device (51) for checking the value document, which is configured to ascertain from the sensor signal pattern (S1) a binary signal pattern (S3) which has only two different signal values (0, 1) along said one dimension (x, y) of the security element (5),
**characterized in that** the evaluation device (31) is configured to check the security element (5, 6) with the help of the binary signal pattern (S3) with regard to a microwriting of the security element, wherein the evaluation device (51) is configured to check the security element (5, 6) with the help of the binary signal pattern (S3) for the presence and/or the arrangement of sections (B, U) of the security element which are inscribed with microwriting and which are uninscribed.

2. The apparatus according to claim 1, wherein the evaluation device checks the security element (5, 6) with regard to the microwriting only along said one dimension.

3. The apparatus according to any of the preceding claims, wherein the evaluation device (51) is configured such that the binary signal pattern (S3) is ascertained with the help of a comparison of the sensor signal pattern (S1) with a first threshold value (Sg).

4. The apparatus according to any of the preceding claims, wherein the evaluation device (51) has a low-pass filter for filtering the sensor signal pattern (S1) and is configured such that the binary signal pattern (S3) is ascertained from the sensor signal pattern (S2) filtered with the low-pass filter.

5. The apparatus according to any of the preceding claims, wherein the evaluation device (51) is configured such that from the sensor signal pattern (S1) there is ascertained a pattern of a standard deviation of the sensor signal pattern and/or of a mean value of the sensor signal pattern along said one dimension (x, y) of the security element (5, 6) and the binary signal pattern (S3) is ascertained with the help of the pattern of the standard deviation or of the mean value of the sensor signal.

6. The apparatus according to claim 5, wherein the evaluation device (51) is configured such that the binary signal pattern (S3) is ascertained with the help of a pattern of a relative standard deviation of the sensor signal pattern (S1), which relative standard deviation is formed from the quotient of the respective standard deviation of the sensor signal pattern and the respective mean value of the sensor signal pattern along said one dimension (x, y) of the security element (5, 6).

7. The apparatus according to any of the preceding claims, wherein the evaluation device (51) is configured to check, with the help of the binary signal pattern (S3) along said one dimension (x, y) of the security element (5), the presence and/or properties of sections (B, U) of the security element (5, 6) which are inscribed with microwriting and which are uninscribed.

8. The apparatus according to any of the preceding claims, wherein the evaluation device is configured to ascertain from the sensor signal pattern (S1) additionally a fine structure signal pattern (S4) along said one dimension, with the help of which a fine structure of the security element's sections (B) inscribed with microwriting can be analyzed, which is characteristic of the microwriting characters within the respective inscribed section (B).

9. The apparatus according to claim 8, wherein the evaluation device (51) is configured to use the fine structure signal pattern (S4) for checking the value document, in particular for checking the denomination and/or the state of the value document.

10. The apparatus according to any of claims 7 to 9, wherein the evaluation device (51) is configured to ascertain a first number of the sections (B) inscribed with microwriting and/or a second number of the uninscribed sections (U) of the security element (5, 6) and to compare the first number or second number with a specified first number or a specified second number, respectively.

11. The apparatus according to any of claims 7 to 10, wherein the evaluation device (51) is configured to ascertain at least one first length of the inscribed sections (B) and/or at least one second length of the uninscribed sections (U) of the security element (5, 6) and to compare the first length or second length with at least one specified first length or second length, respectively, or to derive from the ascertained first lengths or second lengths a first total length or second total length, respectively, which is compared with the total length of the security element (5, 6) along said one dimension (x, y).

12. The apparatus according to any of claims 7 to 11, wherein the evaluation device (51) is configured to ascertain a location and/or sequence of the inscribed sections (B) and/or of the uninscribed sections (U) of the security element (5, 6) and to check the location or sequence of the inscribed or uninscribed sections (B or U) with the help of a specified location or sequence.

13. An apparatus for processing value documents (1) with at least one apparatus (2, 8,10-13, 30, 31, 50) for processing, in particular for conveying and/or counting and/or sorting, value documents (3) and with an apparatus (21-23, 51) for checking the security element of a value document according to any of the preceding claims.

14. A method for checking the security element of a value document, with the following steps:
- capturing electromagnetic radiation which emanates from the security element (5, 6) along a dimension (x, y) of the security element (5, 6), and generating a corresponding sensor signal pattern (S1) along the one dimension (x, y) of the security element (5, 6) from the captured electromagnetic radiation and
- checking the value document with the help of the sensor signal pattern (S1) along the one dimension (x, y) of the security element (5, 6), wherein from the sensor signal pattern (S1) there is ascertained a binary signal pattern (S3) which has only two different signal values (0, 1) along said the one dimension (x, y) of the security element, and wherein the security element (5, 6) is checked with regard to a micro writing of the security element with the help of the binary signal pattern (S3), wherein the security element (5, 6) is checked with the help of the binary signal pattern (S3) for the presence and/or the arrangement of sections (B, U) of the security element which are inscribed with microwriting and which are uninscribed.

## Revendications

1. Dispositif d'examen de l'élément de sécurité d'un document de valeur , en particulier d'un billet de banque (3), ayant
- au moins un capteur (21 - 23) pour la saisie d'un rayonnement électromagnétique émanant le long d'une dimension (x, y) de l'élément de sécurité (5, 6) et pour la génération d'une courbe de signal de capteur (S1), correspondant au rayonnement électromagnétique saisi, le long de la une dimension (x, y) de l'élément de sécurité (5, 6), et
- un équipement d'évaluation (51) pour l'examen de l'élément de sécurité, conçu pour déterminer à partir de la courbe de signal de capteur (S1) une courbe binaire de signal (S3) qui ne comporte que deux valeurs de signal (0, 1) différentes le long de la une dimension (x, y) de l'élément de sécurité (5),
**caractérisé en ce que** l'équipement d'évaluation (31) est conçu pour, au moyen de la courbe binaire de signal (S3), examiner l'élément de sécurité (5, 6) quant à une micro-écriture de l'élément de sécurité, cependant que l'équipement d'évaluation (51) est conçu pour, au moyen de la courbe binaire de signal (S3), examiner l'élément de sécurité (5, 6) quant à la présence et/ou à l'agencement de sections (B, U) de l'élément de sécurité portant une ou ne portant pas de micro-écriture.

2. Dispositif selon la revendication 1, cependant que l'équipement d'évaluation examine l'élément de sécurité (5, 6) seulement le long de la une dimension quant à la présence de la micro-écriture.

3. Dispositif selon une des revendications précédentes, cependant que l'équipement d'évaluation (51) est configuré de telle façon que la courbe binaire de signal (S3) est déterminée à l'aide d'une comparaison entre la courbe de signal de capteur (S1) et une première valeur seuil (Sg).

4. Dispositif selon une des revendications précédentes, cependant que l'équipement d'évaluation (51) comporte un filtre passe-bas pour le filtrage de la courbe de signal de capteur (S1) et est configuré de telle façon que la courbe binaire de signal (S3) est déterminée à partir de la courbe de signal de capteur (S2) filtrée avec le filtre passe-bas.

5. Dispositif selon une des revendications précédentes, cependant que l'équipement d'évaluation (51) est conçu de telle façon que, à partir de la courbe de signal de capteur (S1), une courbe d'un écart type de la courbe de signal de capteur et/ou d'une valeur moyenne de la courbe de signal de capteur le long de la une dimension (x, y) de l'élément de sécurité (5, 6) est déterminée, et la courbe binaire de signal (S3) est déterminée au moyen de la courbe de l'écart type ou de la valeur moyenne du signal de capteur.

6. Dispositif selon la revendication 5, cependant que l'équipement d'évaluation (51) est conçu de telle façon que la courbe binaire de signal (S3) est déterminée au moyen d'une courbe d'un écart type relatif de la courbe de signal de capteur (S1) constituée à partir du quotient de l'écart type respectif de la courbe de signal de capteur et de la valeur moyenne respective de la courbe de signal de capteur le long de la une dimension (x, y) de l'élément de sécurité (5, 6).

7. Dispositif selon une des revendications précédentes, cependant que l'équipement d'évaluation (51) est conçu pour, au moyen de la courbe binaire de signal (S3) le long de la une dimension (x, y) de l'élément de sécurité (5), examiner la présence et/ou des propriétés de sections (B, U) de l'élément de sécurité (5, 6) portant une ou ne portant pas de micro-écriture.

8. Dispositif selon une des revendications précédentes, dans lequel l'équipement d'évaluation est conçu pour, à partir de la courbe de signal de capteur (S1), déterminer en outre une courbe de signal de fine structure (S4) le long de la une dimension, au moyen de laquelle une fine structure des sections (B) de l'élément de sécurité portant une écriture peut être analysée, ladite fine structure étant caractéristique des caractères de micro-écriture à l'intérieur de la section (B) respective portant une écriture.

9. Dispositif de la revendication 8, dans lequel l'équipement d'évaluation (51) est conçu pour utiliser la courbe de signal de fine structure (S4) pour l'examen du document de valeur, en particulier pour l'examen de la dénomination et/ou de l'état du document de valeur.

10. Dispositif selon une des revendications de 7 à 9, cependant que l'équipement d'évaluation (51) est conçu pour déterminer un premier nombre des sections (B) portant une micro-écriture et/ou un deuxième nombre des sections (U) ne portant pas de micro-écriture, de l'élément de sécurité (5, 6), et pour comparer le premier nombre ou le deuxième nombre avec un premier nombre prédéterminé ou avec un deuxième nombre prédéterminé.

11. Dispositif selon une des revendications de 7 à 10, cependant que l'équipement d'évaluation (51) est conçu pour déterminer au moins une première longueur des sections (B) portant une micro-écriture et/ou au moins une deuxième longueur des sections (U) ne portant pas de micro-écriture, de l'élément de sécurité (5, 6), et pour comparer la première longueur ou la deuxième longueur avec au moins une première longueur ou deuxième longueur prédéterminée, ou à partir des premières longueurs ou deuxièmes longueurs prédéterminées, déduire une première longueur totale ou une deuxième longueur totale, laquelle est comparée avec la longueur totale de l'élément de sécurité (5, 6) le long de la une dimension (x, y).

12. Dispositif selon une des revendications de 7 à 11, cependant que l'équipement d'évaluation (51) est conçu pour déterminer une position et/ou succession des sections (B) portant une micro-écriture et/ou des sections (U) ne portant pas de micro-écriture, de l'élément de sécurité (5, 6), et pour vérifier à l'aide d'une position et/ou succession prédéterminée la position et/ou succession des sections portant une ou ne portant pas de micro-écriture (B ou U).

13. Dispositif de traitement de documents de valeur (1) ayant au moins un dispositif (2, 8, 10 - 13, 30, 31, 50) pour le traitement, en particulier pour l'acheminement et/ou le comptage et/ou le triage, de documents de valeur (3), et ayant un dispositif (21 - 23, 51) selon une des revendications précédentes pour l'examen de l'élément de sécurité d'un document de valeur.

14. Procédé d'examen de l'élément de sécurité d'un document de valeur, comprenant les étapes suivantes :
- saisie d'un rayonnement électromagnétique émanant de l'élément de sécurité (5, 6) le long d'une dimension (x, y) de l'élément de sécurité (5, 6), et génération d'une courbe de signal de capteur (S1) correspondante le long d'une dimension (x, y) de l'élément de sécurité (5, 6) à partir du rayonnement électromagnétique saisi, et
- examen de l'élément de sécurité au moyen de la courbe de signal de capteur (S1) le long de la une dimension (x, y) de l'élément de sécurité (5, 6), cependant que, à partir de la courbe de signal de capteur (S1), une courbe binaire de signal (S3) est déterminée, laquelle, le long de la une dimension (x, y) de l'élément de sécurité, ne comporte que deux valeurs de signal (0, 1) différentes, et cependant que l'élément de sécurité (5, 6) est examiné, au moyen de la courbe binaire de signal (S3), quant à une micro-écriture de l'élément de sécurité, cependant que l'élément de sécurité (5, 6) est examiné, au moyen de la courbe binaire de signal (S3), quant à la présence et/ou à l'agencement de sections (B, U) de l'élément de sécurité portant une ou ne portant pas de micro-écriture.
